# FASCICULE DE BREVET EUROPEEN

(11) **EP 4 186 781 B1**
(45) Date de publication et mention de la délivrance du brevet: **28.01.2026**
(21) Numéro de dépôt: 22207220.9
(22) Date de dépôt: 14.11.2022
(51) Int. Cl.: B64D 45/00, B32B 18/00, B64C 1/40

(54) **BOUCLIER THERMIQUE POURVU DE COUCHES DE PROTECTION, EN PARTICULIER POUR UNE PARTIE D'UN AÉRONEF**
HITZESCHILD MIT SCHUTZSCHICHTEN, INSBESONDERE FÜR EIN FLUGZEUGTEIL
HEAT SHIELD WITH PROTECTIVE LAYERS, IN PARTICULAR FOR A PART OF AN AIRCRAFT

(30) Priorité: 30.11.2021 FR 2112697
(43) Date de publication de la demande: 31.05.2023
(73) Titulaire: Airbus Operations SAS, 31060 Toulouse (FR)
(72) Inventeur: BELLANGER, Alexandre, 31060 TOULOUSE (FR); TONNELE, Arnaud, 31060 TOULOUSE (FR)
(74) Mandataire: Gevers & Orès

(56) Documents cités:
- EP-A1- 3 636 427
- US-A- 5 804 306
- US-A1- 2012 276 368
- US-A1- 2018 043 983

## Description

### Domaine technique

La présente invention concerne un bouclier thermique, en particulier pour une partie d'un aéronef.

### Etat de la technique

Bien que non exclusivement, la présente invention s'applique plus particulièrement à la réalisation d'un bouclier thermique au niveau d'un réservoir de carburant d'un aéronef. On sait que certains aéronefs tels que des avions de transport notamment, comportent des réservoirs situés dans une partie du fuselage de l'aéronef, dans lequel est directement intégré le carburant. À titre d'illustration, il peut s'agir d'un réservoir central arrière d'un avion de transport.

Dans ce cas, la structure de l'aéronef doit satisfaire des conditions très strictes en cas de feu à l'extérieur de l'aéronef, en particulier le feu ne doit pas traverser la structure de l'aéronef et la température à la surface interne du fuselage ne doit pas dépasser une température prédéterminée, généralement de l'ordre de 200 °C.

Une partie du fuselage est généralement protégée par un carénage ventral. Toutefois, ce carénage ventral ne recouvre pas, en général, complètement la partie externe du fuselage au niveau du réservoir.

Il existe donc un besoin de disposer d'une solution permettant d'apporter une protection à une partie du fuselage d'un aéronef, en particulier au niveau d'un réservoir de carburant, permettant de satisfaire les conditions requises précitées.

Un exemple de l'art antérieur est fourni par le document US5804306A, qui concerne un écran pare-feu hybride constitué d'un substrat composite à matrice organique co-lié à une couche composite à matrice céramique traitée constituée de plusieurs plis de composite à matrice céramique traitée.

### Exposé de l'invention

La présente invention concerne un bouclier thermique, en particulier pour une partie d'un aéronef, et notamment une partie du fuselage de l'aéronef au niveau d'un réservoir de carburant, permettant de répondre à ce besoin.

Pour ce faire, selon l'invention, le bouclier thermique comporte une pluralité de couches superposées comprenant au moins une couche assurant une protection thermique et une couche assurant une protection contre le feu.

Ainsi, grâce à l'invention, et comme précisé davantage ci-dessous, on obtient un bouclier thermique qui assure à la fois une protection thermique et une protection contre le feu, comme cela est requis dans les applications envisagées. De plus, par sa réalisation en couches superposées, le bouclier thermique peut être facilement adapté aux caractéristiques requises, notamment en adaptant le nombre et/ou les caractéristiques des couches, comme également précisé ci-dessous.

Ledit bouclier thermique présente d'autres avantages indiqués ci-après.

Selon l'invention, le bouclier thermique comporte au moins un empilement de couches configuré pour assurer au moins une protection contre le feu ainsi qu'une couche de mousse ou une lame d'air configurée pour assurer une protection thermique, l'empilement de couches étant solidaire de la couche de mousse ou de la lame d'air.

Selon l'invention, l'empilement de couches comporte un premier ensemble de couches superposées réalisées dans un premier matériau, le premier ensemble de couches assurant la protection contre le feu et la protection thermique, et des deuxième et troisième ensembles de couches superposées réalisées dans un second matériau. De plus, selon l'invention, lesdits deuxième et troisième ensembles sont identiques et sont agencés, respectivement, de part et d'autre dudit premier ensemble. De plus, avantageusement, au moins l'une desdites couches est réalisée dans l'un des matériaux suivants : du verre, du titane, de la céramique, un matériau à base de carbone.

En outre, dans une seconde réalisation du premier mode de réalisation, représentant une alternative non couverte par l'invention, le bouclier thermique comporte une couche de titane configurée pour assurer une protection contre le feu ainsi qu'une couche de mousse ou une lame d'air configurée pour assurer une protection thermique.

Par ailleurs, dans un second mode de réalisation, représentant une alternative non couverte par l'invention, la pluralité de couches du bouclier thermique comprend au moins une couche qui est apte à assurer simultanément une protection thermique et une protection contre le feu. De façon avantageuse, ladite couche est réalisée en céramique. En outre, avantageusement,

le bouclier thermique comporte une pluralité de couches superposées aptes à assurer simultanément une protection thermique et une protection contre le feu.

Par ailleurs, dans un mode de réalisation particulier, le bouclier thermique comporte au moins une couche pourvue d'un treillis métallique, de préférence pré-imprégné.

De façon avantageuse, le bouclier thermique comporte également une couche de protection externe, en particulier pour protéger la couche pourvue du treillis métallique.

La présente invention concerne également une partie d'aéronef, en particulier une partie du fuselage de l'aéronef, notamment au niveau d'un réservoir de carburant de l'aéronef, qui comporte au moins un bouclier thermique tel que celui décrit ci-dessus, qui est collé sur une face (de préférence externe) de ladite partie d'aéronef.

La présente invention concerne en outre un aéronef, en particulier un avion de transport. Selon l'invention, ledit aéronef comporte au moins un bouclier thermique tel que celui décrit ci-dessus, qui est collé sur une face d'une partie dudit aéronef et/ou au moins une partie d'aéronef telle que celle décrite ci-dessus.

### Brève description des figures

Les figures annexées feront bien comprendre comment l'invention peut être réalisée. Sur ces figures, des références identiques désignent des éléments semblables.
La figure 1 est une vue schématique, éclatée et en coupe, d'un bouclier thermique, collé à une partie de structure, selon une première réalisation d'un premier mode de réalisation comprenant une couche de mousse, représentant une variante non couverte par l'invention.
La figure 2 est une vue schématique, éclatée et en coupe, d'un bouclier thermique, collé à une partie de structure, selon une seconde réalisation dudit premier mode de réalisation, représentant une variante couverte par l'invention.
La figure 3 est une vue schématique, éclatée et en coupe, d'un bouclier thermique, collé à une partie de structure, selon un second mode de réalisation, représentant une variante non couverte par l'invention.
La figure 4 est une vue latérale schématique d'un aéronef pourvu d'un bouclier thermique.
La figure 5 est une vue partielle, schématique et agrandie, en perspective, d'une partie de l'aéronef de la figure 4, qui est pourvue d'un bouclier thermique.
La figure 6 est une vue partielle, en coupe, d'une partie d'un fuselage d'aéronef, pourvue d'un bouclier thermique.

### Description détaillée

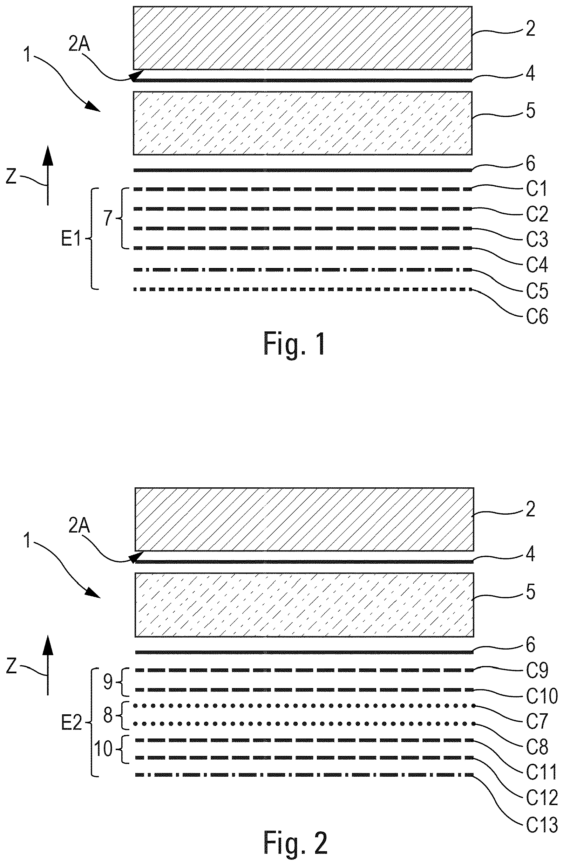

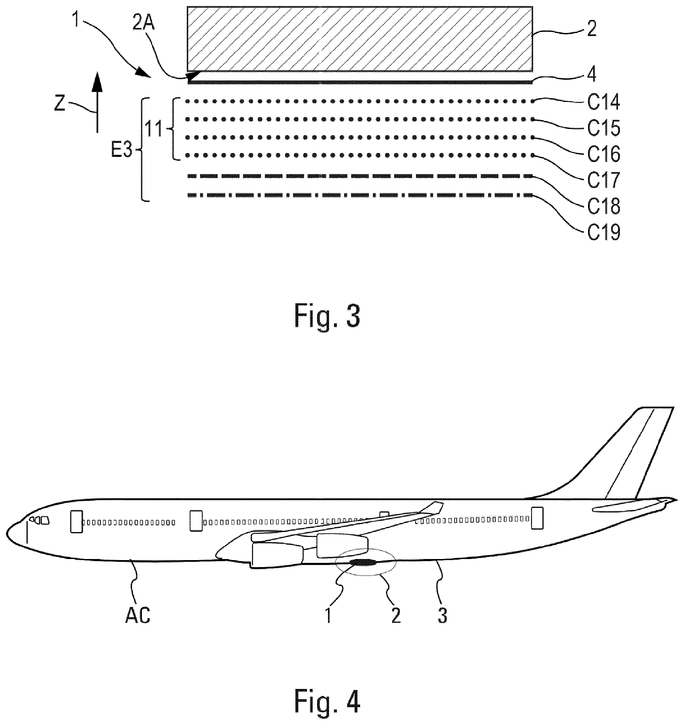

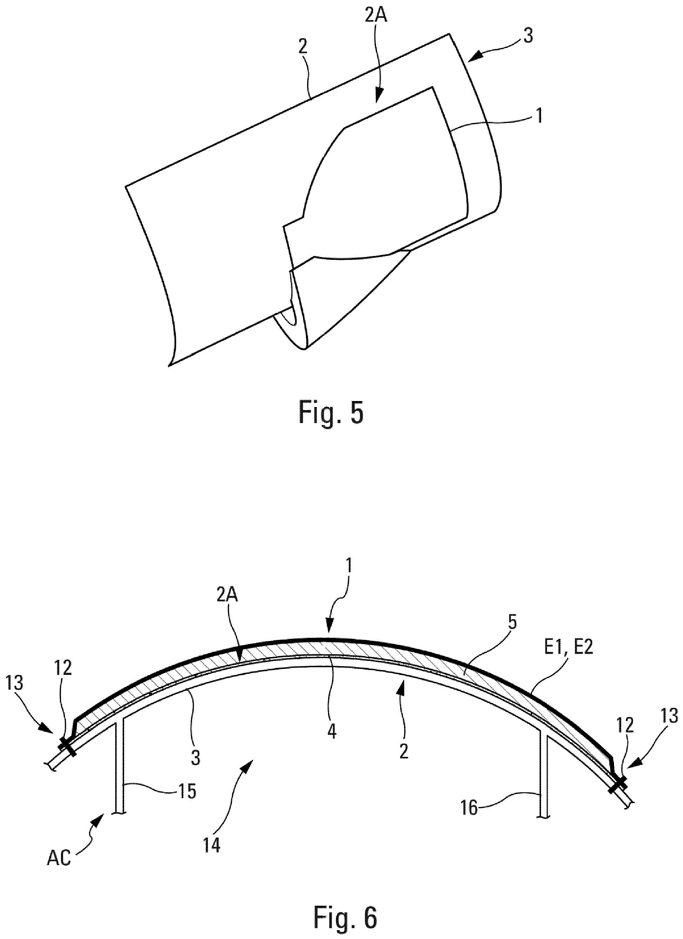

Le bouclier thermique 1 représenté schématiquement dans des modes de réalisation différents sur les figures 1 à 3 et permettant d'illustrer l'invention est destiné à être monté sur une partie 2 de structure à protéger comme précisé ci-dessus. De préférence, cette partie 2 est une partie d'un aéronef AC, en particulier d'un avion de transport, comme représenté sur les figures 4 et 5.

Dans un mode de réalisation préféré mais non limitatif, la partie 2 de l'aéronef AC (entourée sur la figure 4 et montrée en perspective sur la figure 5), qui est destinée à recevoir le bouclier thermique 1, est une partie du fuselage 3 de l'aéronef AC, notamment au niveau d'un réservoir de carburant (non représenté).

La partie de l'aéronef AC destinée à recevoir le bouclier thermique 1 peut correspondre à toute partie de l'aéronef AC devant être particulièrement protégée contre le feu et la chaleur. Le bouclier thermique 1 peut également s'appliquer à une partie de structure d'un système ou d'un engin (notamment mobile) autre qu'un aéronef.

Selon l'invention, le bouclier thermique 1 comporte, comme précisé ci-dessous, une pluralité de couches superposées comprenant au moins une couche assurant une protection thermique et une couche assurant une protection contre le feu.

On entend :
- par protection thermique, une protection permettant d'assurer que la température sur une surface (opposée à celle soumise à une source de chaleur) de la partie 2 à protéger ne dépasse pas une température prédéterminée, généralement de l'ordre de 200°C ; et
- par protection contre le feu, une protection permettant d'empêcher le feu de traverser la partie 2.

Pour assurer ces protections, le bouclier thermique 1 est destiné à être fixé sur la partie 2 de l'aéronef AC, et généralement sur une face externe 2A de cette partie 2. Dans un mode de réalisation préféré, le bouclier 1 est collé sur la face externe 2A de la partie 2 par l'intermédiaire d'une colle 4 appropriée. A titre d'exemple non limitatif, la colle 4 (figures 1 à 3) peut correspondre à l'une des colles suivantes : un mastic en silicone, un mastic dit d'étanchéité ou une colle à base d'époxy. Le collage permet ainsi d'éviter la transmission de la chaleur.

Le bouclier thermique 1 est agencé à l'extérieur de la partie 2 de l'aéronef AC. Sur les figures 1 à 3, on a représenté une flèche Z dirigée de l'extérieur vers l'intérieur. Dans la suite de la description, on entend par « interne » et « intérieur » dans le sens indiqué par la flèche Z et par « externe » et « extérieur » en sens opposé.

Dans un premier mode de réalisation, représenté sur les figures 1 et 2, le bouclier thermique 1 comporte une couche de mousse 5 configurée pour assurer une protection contre le feu. Dans une variante (non représentée), le bouclier thermique 1 peut comporter une lame d'air à la place de la couche de mousse 5.

Le bouclier thermique 1 comporte également un empilement de couches E1, E2. On entend par empilement de couches une succession de couches superposées. Cet empilement de couches E1, E2 est configuré pour assurer au moins une protection contre le feu.

Sur les figures 1 à 3, pour des raisons de simplification du dessin, les couches sont représentées de façon éclatée en étant séparées les unes des autres selon la direction Z. Bien entendu, les différents éléments représentés sur ces figures 1 à 3, et qui se suivent directement, sont en contact les uns des autres dans la direction Z.

L'empilement de couches E1, E2 est rendu solidaire de la couche de mousse 5 par collage, par l'intermédiaire d'une colle 6 appropriée. La colle 6 peut notamment correspondre à l'une des colles suivantes : un mastic en silicone ou une colle à base d'époxy. Dans le cas d'une lame d'air, l'empilement de couches peut être rendu solidaire de la lame d'air par une fixation par écrou ou par boulon.

Dans le cadre de la présente invention, l'empilement de couches E1, E2 peut être réalisé de différentes manières. En particulier, il peut comporter un nombre variable de couches et également des couches de matériaux différents, en particulier pour mettre en œuvre des fonctions différentes, comme précisé ci-dessous.

Dans une première réalisation (représentée sur la figure 1) de ce premier mode de réalisation, l'empilement de couches E1 comporte un ensemble 7 formé d'une pluralité de couches superposées, par exemple en verre ou en carbone, qui est destiné à réaliser une protection contre le feu. Dans l'exemple de la figure 1, l'ensemble 7 comporte quatre couches C1, C2, C3 et C4 superposées.

L'empilement de couches E1 comprend également une couche C5 pourvue d'un treillis (ou réseau) métallique assurant une conductivité électrique. Ce treillis métallique est destiné à drainer, de façon usuelle, les courants électriques susceptibles d'apparaître dans la partie 2, par exemple des courants électriques générés par la foudre. La couche C5 recouvre l'ensemble 7 vers l'extérieur.

Le bouclier thermique 1 comporte également une couche de protection C6 externe. Cette couche de protection C6 externe, réalisée par exemple en verre, est agencée sur la face externe de la couche C5 pourvue du treillis métallique et est destinée à protéger cette couche C5.

Dans une variante de réalisation (non représentée), la couche C5 et la couche de protection C6 peuvent être remplacées par une unique couche pourvue d'un treillis métallique pré-imprégné. Dans ce cas, la couche comprend une résine imprégnant le treillis métallique.

Par ailleurs, dans une seconde réalisation (représentée sur la figure 2) de ce premier mode de réalisation, l'empilement de couches E2 comporte un ensemble 8 de couches C7 et C8 superposées. Les couches C7 et C8 sont réalisées dans un premier matériau, par exemple en céramique. Cet ensemble 8 est configuré pour assurer une protection contre le feu ainsi qu'une protection thermique.

L'empilement de couches E2 comporte également un ensemble 9 de couches C9 et C10 superposées. Les couches C9 et C10 sont réalisées dans un second matériau, par exemple en verre. Cet ensemble 9 qui est agencé sur la face interne de l'ensemble 8 est, notamment, destiné à procurer un complément de protection contre le feu ainsi qu'une rigidité au bouclier thermique 1, en particulier pour faciliter sa manipulation et éviter des déformations.

L'empilement de couches E2 comporte, de plus, un ensemble 10 de couches C11 et C12 superposées. Les couches C11 et C12 sont réalisées, de préférence, dans le même matériau que les couches C9 et C10 de l'ensemble 9. Cet ensemble 10 qui est agencé sur la face externe de l'ensemble 8 est destiné à procurer un complément de protection contre le feu ainsi qu'une rigidité au bouclier thermique et assurer une protection contre divers dommages potentiels.

Dans le mode de réalisation représenté sur la figure 2, qui correspond à l'invention, les ensembles 9 et 10 sont identiques et permettent, comme ils sont agencés, respectivement, de part et d'autre de l'ensemble 9 (vers l'intérieur et vers l'extérieur), d'obtenir un assemblage de couches C7 à C12 qui est sensiblement symétrique, ce qui évite les déformations pendant sa fabrication (cuisson) et facilite sa manipulation.

Par ailleurs, l'empilement de couches E2 comporte également une couche C13 pourvue d'un treillis métallique assurant une conductivité électrique. Ce treillis métallique est destiné à drainer, de façon usuelle, les courants électriques susceptibles d'apparaître dans la partie 2, par exemple des courants électriques générés par la foudre. Dans cet exemple, la couche C13 est pourvue d'un treillis métallique pré-imprégné, c'est-à-dire qu'elle comprend une résine imprégnant le treillis métallique. La couche C13 recouvre l'ensemble 10 vers l'extérieur.

Dans une variante de réalisation (non représentée), la couche C13 pourvue d'un treillis métallique pré-imprégné peut être remplacée par deux couches similaires aux couches C5 et C6 de la figure 1.

Dans une réalisation particulière (non représentée et non couverte par l'invention) du premier mode de réalisation précité (comprenant une couche de mousse ou une lame d'air pour la protection thermique), on peut prévoir pour la protection contre le feu une monocouche de titane, au lieu de l'empilement de couches E1, E2.

Par ailleurs, dans un second mode de réalisation représenté sur la figure 3, correspondant à une variante non couverte par l'invention, le bouclier thermique 1 comporte un empilement de couches E3. Cet empilement de couches E3 comprend un ensemble 11 de couches C14, C15, C16 et C17 superposées. Chacune des couches C14, C15, C16 et C17 est apte à assurer, à la fois, une protection thermique et une protection contre le feu. Ces couches C14, C15, C16 et C17 superposées sont réalisées dans un même matériau, par exemple
en céramique. Dans une variante non représentée, les couches C14, C15, C16 et C17 superposées peuvent être réalisées dans des matériaux différents.

Ce second mode de réalisation de la figure 3 ne nécessite pas l'utilisation d'une mousse (comme le premier mode de réalisation décrit ci-dessus en référence aux figures 1 et 2), pour assurer la protection thermique. Ceci permet, notamment, de réduire l'épaisseur du bouclier thermique 1.

L'empilement de couches E3 comprend, de plus, une couche C18, par exemple en verre, destinée à réaliser une protection mécanique. La couche C18 recouvre l'ensemble 11 vers l'extérieur.

Par ailleurs, l'empilement E3 de couches comprend également une couche C19 pourvue d'un treillis métallique. La couche C19 recouvre la couche C18 vers l'extérieur. Dans cet exemple, la couche C19 est pourvue d'un treillis métallique pré-imprégné et est, par exemple, similaire à la couche C13 de la figure 2.

Dans une variante de réalisation (non représentée), la couche C19 peut être remplacée par deux couches similaires aux couches C4 et C5 de la figure 1.

Dans le cadre de la présente invention, les couches du bouclier thermique 1 peuvent être réalisées en différents matériaux. Dans un mode de réalisation préféré, au moins l'une et de préférence une pluralité desdites couches, en particulier celles destinées à assurer une protection contre le feu et éventuellement une protection thermique, sont réalisées dans l'un des matériaux suivants : du verre, du titane, de la céramique, un matériau à base de carbone.

Par conséquent, quel que soit le mode de réalisation considéré, on obtient un bouclier thermique 1 qui assure à la fois une protection thermique et une protection contre le feu, comme cela est requis dans les applications envisagées.

De plus, par sa réalisation en couches superposées, le bouclier thermique 1 peut être facilement adapté aux caractéristiques requises, notamment en adaptant le nombre et/ou les caractéristiques des couches. En particulier, en fonction de l'application envisagée, on peut prévoir une ou plusieurs couches supplémentaires aptes à assurer des protections ou fonctions particulières, autres que la protection thermique et la protection contre le feu, comme par exemple les couches C5, C13 et C19 qui ont pour fonction de réaliser un drainage de courants électriques.

En outre, on sait que, pour une structure formée d'un assemblage de couches, destinée à assurer une protection contre le feu et/ou une protection thermique, l'importance de la protection augmente avec l'épaisseur de l'assemblage. Ainsi, par la réalisation en couches superposées, on peut facilement adapter le nombre de couches pour obtenir l'épaisseur globale appropriée permettant de remplir la ou les protections souhaitées.

On précise, ci-après, des exemples de procédés de fabrication du bouclier thermique 1 tel que décrit ci-dessus.

Pour fabriquer le bouclier thermique 1 selon le premier mode de réalisation, tel que représenté sur les figures 1 et 2, on utilise un premier procédé de fabrication. Ce premier procédé de fabrication comprend une première étape consistant, tout d'abord, à fabriquer un panneau composite formé de l'empilement de couches E1, E2. Pour ce faire, les différentes couches de l'empilement de couches E1, E2 sont montées dans un moule et une cuisson est réalisée de façon usuelle. Dans le cadre de la présente invention, toute méthode usuelle pour réaliser un panneau composite à partir d'un tel empilement de couches peut être utilisée pour mettre en œuvre cette première étape. Le panneau composite peut également comporter en variante une monocouche de titane.

Ce premier procédé de fabrication comprend également une seconde étape consistant à coller, de façon usuelle, le panneau composite ainsi formé à la couche de mousse 5 à l'aide de la colle 6, par exemple un mastic en silicone ou une colle à base d'époxy, ou à le rendre solidaire de la lame d'air par une fixation par écrou ou par boulon.

Par ailleurs, pour fabriquer le bouclier thermique selon le second mode de réalisation, tel que représenté sur la figure 3, on utilise un second procédé de fabrication. Ce second procédé de fabrication consiste à fabriquer un panneau composite formé de l'empilement de couches E3. Pour ce faire, les différentes couches de l'empilement de couches E3 sont montées dans un moule, et une cuisson est réalisée de façon usuelle. Dans le cadre de la présente invention, toute méthode usuelle pour réaliser un panneau composite à partir d'un tel empilement de couches peut être utilisée pour mettre en œuvre ce second procédé de fabrication.

Le bouclier thermique 1, fabriqué selon l'un quelconque des premier et second procédés de fabrication précités, est fixé par collage, à l'aide de la colle 4, par exemple un mastic en silicone, un mastic dit d'étanchéité ou une colle à base d'époxy, par sa surface interne, sur la face externe 2A de la partie 2 de l'aéronef AC. De préférence, la colle est appliquée sur toute la surface interne du bouclier thermique 1. Dans une variante de réalisation, il est également envisageable de prévoir le collage uniquement sur une ou plusieurs zones de la surface interne du bouclier thermique 1 et pas sur toute cette surface interne.

La fixation par collage présente l'avantage de ne pas réduire la protection thermique générée par le bouclier thermique 1. En effet, on évite ainsi, en particulier, l'utilisation d'éléments de fixation tels que des rivets ou des boulons qui sont traversants et conducteurs de chaleur et qui réduiraient les propriétés de protection thermique s'ils étaient utilisés pour réaliser la fixation.

Dans un premier mode de réalisation, le bouclier thermique 1 est uniquement fixé par collage, à l'aide de la colle 4, sur la face externe 2A de la partie 2.

En outre, dans un second mode de réalisation représenté sur la figure 6, on prévoit, en plus d'un collage tel que celui mis en œuvre dans le premier mode de réalisation, une fixation supplémentaire. Cette fixation supplémentaire peut être réalisée, par exemple, par des éléments de fixation 12 tels que des rivets ou des boulons. De préférence, cette fixation est uniquement réalisée à des points de fixation successifs situés en dehors de la zone à protéger, le long d'une ligne prévue près de la périphérie dudit bouclier thermique.

Dans une réalisation préférée, comme représenté sur la figure 6, le bouclier thermique 1 présente une surface qui couvre complètement la partie à protéger et qui déborde cette partie à protéger par une zone dite périphérique 13, et la fixation supplémentaire est réalisée dans cette zone périphérique 13.

Cette fixation supplémentaire permet de toujours maintenir le bouclier thermique 1 solidaire de la partie 2, si pour une raison particulière le collage perdait en efficacité.

Comme indiqué ci-dessus, dans un mode de réalisation préféré mais non limitatif, la partie 2 de l'aéronef AC qui est protégée par le bouclier thermique 1, est une partie du fuselage 3 de l'aéronef AC, au niveau d'un réservoir de carburant 14, comme représenté sur la figure 6, et notamment une partie 2 du fuselage 3 non protégée par un carénage ventral. Le cas échéant, le bouclier thermique peut être collé au niveau d'au moins l'une de ses extrémités à un carénage ventral (non représenté).

Sur la figure 6, on a représenté partiellement des parois latérales 15 et 16 du réservoir de carburant 14, le réservoir de carburant 14 étant situé entre ces parois latérales 15 et 16. Dans cet exemple, le bouclier 1 correspond à celui du premier mode de réalisation, comprenant l'empilement de couches E1 ou E2 qui est collé (par une colle non représentée) sur la couche de mousse 5. Le bouclier 1 pourrait également correspondre à un autre mode de réalisation et notamment au second mode de réalisation (sans couche de mousse). Le bouclier 1 présente une surface qui couvre complètement la partie à protéger, à savoir la partie du fuselage 3 entre les parois latérales 15 et 16, et qui déborde cette partie à protéger, vers l'extérieur du réservoir à carburant 14 et donc des parois latérales 15 et 16, au niveau de la zone périphérique 13. Au niveau de cette zone périphérique 13 est réalisée la fixation supplémentaire à l'aide des éléments de fixation 12 traversants. Ces éléments de fixation 12 traversants, qui sont susceptibles d'atténuer la protection thermique sont donc situés à l'extérieur de la zone à protéger.

Dans l'exemple de la figure 6, l'empilement de couches E1 ou E2 présente une surface qui couvre complètement la couche de mousse 5 et qui déborde cette couche de mousse 5. La fixation supplémentaire est réalisée au niveau de la zone périphérique 13 qui comprend uniquement l'empilement de couches E1 ou E2.

Dans le cadre de la présente invention, la partie de l'aéronef AC destinée à recevoir le bouclier thermique 1 peut correspondre à toute partie de l'aéronef AC devant être particulièrement protégée contre le feu et la chaleur.

Par ailleurs, le bouclier thermique 1 peut également s'appliquer à une partie d'un système ou d'un engin autre qu'un aéronef, qui nécessite une telle protection.

## Revendications

1. Bouclier thermique, en particulier pour une partie d'un aéronef, ledit bouclier thermique (1) comportant une pluralité de couches superposées (C7 à C13) comprenant au moins couche de mousse (5) ou une lame d'air configurée pour assurer une protection thermique et au moins un empilement de couches ( E2) configuré pour assurer au moins une protection contre le feu, l'empilement de couches ( E2) étant solidaire de la couche de mousse (5) par collage ou de la lame d'air par une fixation, l'empilement de couches (E2) comportant un premier ensemble (8) de couches (C7, C8) superposées réalisées dans un premier matériau, le premier ensemble (8) de couches assurant la protection contre le feu et la protection thermique, et des deuxième et troisième ensembles (9, 10) de couches (C9, C10, C11, C12) superposées réalisées dans un second matériau procurant un complément de protection contre le feu ainsi qu'une rigidité, lesdits deuxième et troisième ensembles (9, 10) étant identiques et agencés, respectivement, de part et d'autre dudit premier ensemble (8).

2. Bouclier thermique la revendication 1,
**caractérisé en ce qu'**au moins l'une desdites couches est réalisée dans l'un des matériaux suivants : du verre, du titane, de la céramique, un matériau à base de carbone.

3. Bouclier thermique selon l'une quelconque des revendications précédentes, **caractérisé en ce qu'**il comporte au moins une couche (C13) pourvue d'un treillis métallique.

4. Bouclier thermique selon l'une quelconque des revendications précédentes, **caractérisé en ce qu'**il comporte une couche de protection externe

5. Partie d'aéronef,
**caractérisée en ce qu'**elle comporte au moins un bouclier thermique (1) selon l'une quelconque des revendications 1 à 4, qui est collé sur une face (2A) de ladite partie (2).

6. Aéronef,
**caractérisé en ce qu'**il comporte au moins un bouclier thermique (1) selon l'une quelconque des revendications 1 à 4, qui est collé sur une face (2A) d'une partie (2) dudit aéronef (AC) et/ou au moins une partie (2) d'aéronef (AC) selon la revendication 5.

## Patentansprüche

1. Wärmeabschirmung, insbesondere für ein Teil eines Luftfahrzeugs, wobei die Wärmeabschirmung (1) eine Vielzahl von überlagerten Schichten (C7 bis C13) umfasst, die mindestens eine Schaumschicht (5) oder einen Luftspalt, die/der konfiguriert ist, um einen Wärmeschutz zu gewährleisten, und mindestens einen Schichtstapel (E2) beinhaltet, der konfiguriert ist, um mindestens einen Schutz gegen Feuer zu gewährleisten, wobei der Schichtstapel (E2) mittels Verklebung mit der Schaumschicht (5) oder mittels einer Befestigung mit dem Luftspalt einstückig ist, wobei der Schichtstapel (E2) eine erste Baugruppe (8) von überlagerten Schichten (C7, C8), die aus einem ersten Material hergestellt sind, wobei die erste Baugruppe (8) von Schichten den Schutz gegen Feuer und den Wärmeschutz gewährleistet, und eine zweite und eine dritte Baugruppe (9, 10) von überlagerten Schichten (C9, C10, C11, C12) umfasst, die aus einem zweiten Material hergestellt sind, die einen ergänzenden Schutz gegen Feuer sowie eine Rigidität bieten, wobei die zweite und die dritte Baugruppe (9, 10) identisch und jeweils zu beiden Seiten der ersten Baugruppe (8) angeordnet sind.

2. Wärmeschutzschild nach Anspruch 1,
**dadurch gekennzeichnet, dass** mindestens eine der Schichten aus einem der folgenden Materialien hergestellt ist: Glas, Titan, Keramik, einem Material auf Kohlenstoffbasis.

3. Wärmeschutzschild nach einem der vorstehenden Ansprüche, **dadurch gekennzeichnet, dass** er mindestens eine mit einem Metallgeflecht versehene Schicht (C13) umfasst.

4. Wärmeschutzschild nach einem der vorstehenden Ansprüche, **dadurch gekennzeichnet, dass** er eine externe Schutzschicht umfasst.

5. Teil eines Luftfahrzeugs,
**dadurch gekennzeichnet, dass** es mindestens einen Wärmeschutzschild (1) nach einem der Ansprüche 1 bis 4 umfasst, der auf eine Fläche (2A) des Teils (2) geklebt ist.

6. Luftfahrzeug,
**dadurch gekennzeichnet, dass** es mindestens einen Wärmeschutzschild (1) nach einem der Ansprüche 1 bis 4 umfasst, der auf eine Fläche (2A) des Teils (2) des Luftfahrzeugs (AC) und/oder mindestens ein Teil (2) des Luftfahrzeugs (AC) nach Anspruch 5 geklebt ist.

## Claims

1. A heat shield, in particular for a part of an aircraft, the heat shield (1) having a plurality of superposed layers (C7 to C13) comprising at least one layer of foam (5) or one air gap configured to provide thermal protection and at least one stack of layers (E2) that is configured to provide at least fire protection, the stack of layers (E2) being joined to the layer of foam (5) with adhesive bonding or to the air gap with fixing, the stack of layers (E2) having a first set (8) of superposed layers (C7, C8) made from a first material, the first set (8) of layers providing fire protection and thermal protection, and second and third sets (9, 10) of superposed layers (C9, C10, C11, C12) made from a second material providing additional fire protection and also stiffness, said second and third sets (9, 10) being identical and being arranged, respectively, on either side of said first set (8).

2. The heat shield as claimed in claim 1,
**characterized in that** at least one of said layers is made from one of the following materials: glass, titanium, ceramic, a carbon-based material.

3. The heat shield as claimed in any one of the preceding claims,
**characterized in that** it has at least one layer (C13) provided with a metal lattice.

4. The heat shield as claimed in any one of the preceding claims,
**characterized in that** it has an external protective layer.

5. An aircraft part,
**characterized in that** it has at least one heat shield (1) as claimed in any one of claims 1 to 4, which is adhesively bonded to a face (2A) of said part (2).

6. An aircraft,
**characterized in that** it has at least one heat shield (1) as claimed in any one of claims 1 to 4, which is adhesively bonded to a face (2A) of a part (2) of said aircraft (AC) and/or at least one aircraft (AC) part (2) as claimed in claim 5.
